# FASCICULE DE BREVET EUROPEEN

(11) **EP 1 296 090 B1**
(45) Date de publication et mention de la délivrance du brevet: **19.08.2009**
(21) Numéro de dépôt: 02292280.1
(22) Date de dépôt: 18.09.2002
(51) Int. Cl.: F16L 59/02

(54) **Agencement de fixation d'un matelas d'isolation et procédé afferent**
Anordnung zum Befestigen einer Isoliermatte und Verfahren dafür
Arrangement for fastening an insulating mat and process therefor

(30) Priorité: 20.09.2001 FR 0112132
(43) Date de publication de la demande: 26.03.2003
(73) Titulaire: AIRCELLE, 76700 Gonfreville l'Orcher (FR)
(72) Inventeur: Hogie, Jean-Paul René André, 76600 Le Havre (FR); Loisel, Patrice Denis, 76210 Bolbec (FR); Mahieu, Jean-Claude Eugène Henri, 76600 Le Havre (FR)
(74) Mandataire: Gaillarde, Frédéric F. Ch.

(56) Documents cités:
- DD-A1- 156 615
- FR-A- 2 689 579
- GB-A- 1 268 626
- GB-A- 2 030 631
- US-A- 3 785 407
- US-A- 4 070 841

## Description

On traitera ici d'un agencement de fixation d'un matelas d'isolation à un panneau d'aéronef et d'un procédé afférent.

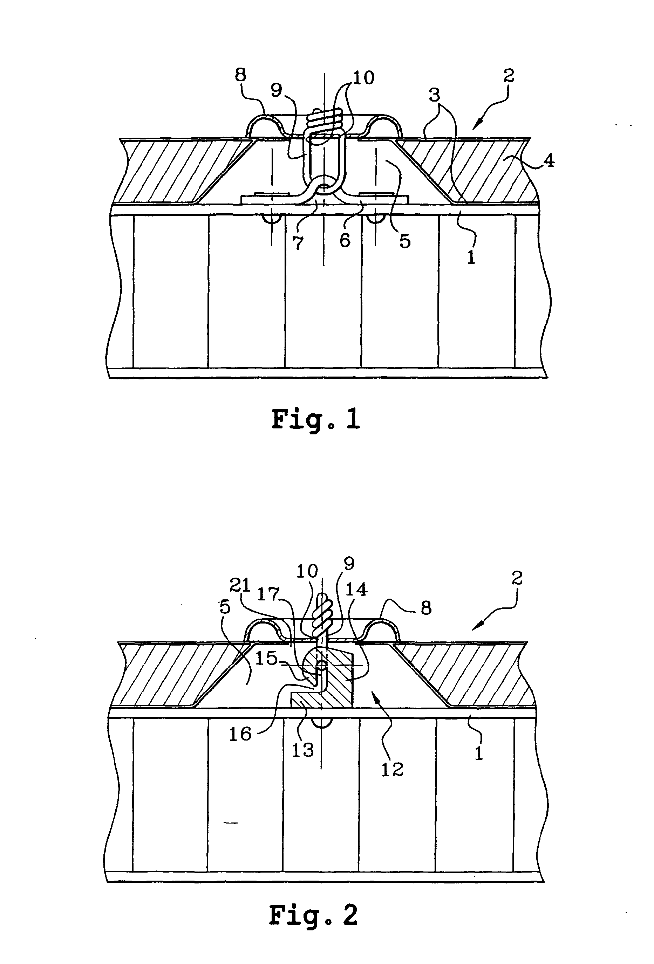

Certains panneaux d'aéronefs sont couverts d'un matelas d'isolation thermique pour arrêter le rayonnement d'une source de chaleur avoisinante. D'autres propriétés d'isolation, notamment phonique, peuvent également être recherchées. Ces matelas comprennent ordinairement des fibres ou une autre matière isolante de bourrage entre deux feuillards métalliques. Ils sont à l'ordinaire fixés par points au panneau par le système représenté à la figure 1, où le panneau porte la référence 1, le matelas la référence 2, les feuillards la référence 3 et la bourre la référence 4. Le matelas 2 est muni d'ouvertures 5 menant au panneau 1 et laissant libres des pontets 6 rivetés au panneau 1 qui consistent en des plaquettes courbées au centre pour former un oeillet 7.

Des boutons 8 sont posés sur le matelas 2 aux ouvertures 5, et une boucle de fil métallique 9 est engagée dans l'oeillet 7 et à travers deux trous 10 du bouton 8 de manière que ses extrémités apparaissent à la surface du matelas 2 pour être torsadées et donner une tresse qui ferme la boucle 9. Il devient alors impossible d'arracher le bouton 8, et le matelas 2 reste posé sur le panneau 1.

L'état de la technique est illustré par le document GB 2030631.

Il n'est pas commode de manipuler les boucles 9 dans les ouvertures 5 si celles-ci sont étroites et profondes, ni surtout de les engager dans les oeillets 7. C'est pourquoi il est usuel de commencer par apporter les boucles 9 et à les introduire dans les oeillets 7, puis de poser le matelas 2, et enfin de descendre les boutons 8 en faisant passer les extrémités de la boucle 9 par les trous 10 avant de fermer la boucle 9. Ce procédé reste toutefois malaisé et prend du temps, tout en obligeant à utiliser des boucles 9 relativement longues ; afin de permettre l'assemblage des boucles 9 et des pontets 6 à travers les ouvertures 5, les surfaces de matelas doivent être réduites ; et il est souvent impossible de réparer un point de fixation défaillant, avec le matelas 2, faute de pouvoir introduire une boucle 9 neuve dans l'oeillet 7.

L'invention a pour objet un agencement de fixation d'un matelas d'isolation thermique à un panneau d'aéronef à protéger, comprenant une ouverture du matelas débouchant par un oeillet, un bouton percé de deux trous couvrant l'ouverture, une boucle de fil métallique traversant les trous assemblée sur le bouton et glissée sous le bouton, caractérisé en ce qu'il comprend un crochet fixé au panneau par une base, s'élevant dans l'ouverture du matelas vers le bouton puis se recourbant vers le panneau jusqu'à une extrémité libre distante vers le panneau et de la base, et en ce que la boucle occupe l'extrémité recourbée du crochet fixé au panneau, formant un logement. Cet agencement est beaucoup plus facile à assembler que le précédent et se prête bien à des réparations une fois que le matelas a été installé.

Voici maintenant les figures servant de fondement à la description détaillée de l'invention et qui aideront à faire comprendre ses différents aspects :
- la figure 1, déjà décrite, est une vue d'agencement de fixation de matelas d'isolation sur un panneau selon l'art connu,
- la figure 2 est une vue de l'invention,
- et la figure 3 illustre le déroulement d'une variante de procédé d'assemblage autorisée par l'invention.

Se reportant à la figure 2, on voit que le pontet 6 a été remplacé par un crochet 12 comprenant une base 13 rivetée au panneau 1, une portion principale 14 se dressant dans l'ouverture 5 au-dessus du panneau 1 et une portion d'extrémité 15 recourbée vers la base 13 tout en étant séparée par un espacement 16 menant à un logement 17 sous le crochet. La boucle 9 est ici engagée dans le logement 17. Comme auparavant, elle est engagée à travers une paire de trous 10 du bouton 8 (un seul d'entre eux est représenté ici) et ses extrémités sont torsadées en tresse sur le bouton 8 pour fermer la boucle.

L'intérêt de l'invention apparaîtra mieux aux commentaires du procédé d'assemblage. Contrairement à ce qu'on fait aujourd'hui, il devient possible de poser d'abord le matelas 2 sur le panneau 1, les crochets 12 se plaçant dans les ouvertures 5, puis de descendre les boucles 9 à travers des oeillets 21 dans les ouvertures 5, puisqu'il suffit de les déplacer latéralement pour les introduire dans les logements 17 en passant par les espacements 16, sans devoir les déformer ou les tourner, ce qui était nécessaire auparavant pour descendre une extrémité de la boucle 9 sur le pontet 6 puis pour la remonter à travers le matelas 2 alors même que le volume dans les ouvertures 5 était réduit. Le bouton 8 peut être descendu sur les ouvertures 5 quand les boucles 9 ont été installées dans les crochets 12, et, comme précédemment, les extrémités de la boucle sont enfilées dans les trous 10 et assemblées entre elles pour fermer la boucle 9.

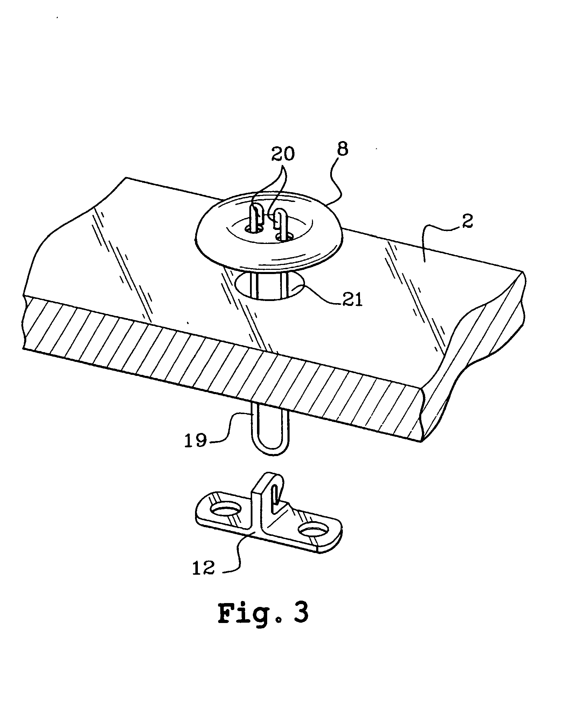

On conçoit que cet agencement de fixation se prête aisément à la réparation en remplaçant la boucle 9 endommagée par une autre. Et d'après une variante du procédé illustrée à la figure 3, la boucle 9 peut être remplacée par une boucle en épingle 19 préformée dont les extrémités 20 sont recourbées pour prendre appui sur les boutons 8 à côté des trous 10. Les ensembles constitués de boutons 8 et des boucles en épingle 19 sont descendus sur les ouvertures 5 respectives, les boucles 19 passant à travers les oeillets 21 du matelas 2, par lesquelles les ouvertures 5 débouchent sur l'extérieur, puis déplacés latéralement pour que les boucles en épingle 19 passent dans les espacements 16 ; les boucles en épingle 19 peuvent alors être remontées dans les logements 17 pour assembler les extrémités 20 entre elles.

## Revendications

1. Agencement de fixation d'un matelas (2) d'isolation à un panneau (1) d'aéronef à protéger, comprenant une ouverture (5) du matelas débouchant par un oeillet (21), un bouton (8) percé de deux trous (10) couvrant l'ouverture, une boucle (9) de fil métallique traversant les trous, assemblée sur le bouton (8) et glissée sous le bouton, **caractérisé en ce qu'**il comprend un crochet (12) fixé au panneau par une base (13), s'élevant dans l'ouverture (5) du matelas vers le bouton (8) puis se recourbant vers le panneau jusqu'à une extrémité libre distante du panneau et de la base en formant un logement (17), et **en ce que** la boucle (9) occupe le logement.

2. Procédé de fixation d'un matelas (2) d'isolation à un panneau (1) d'aéronef à protéger, **caractérisé en ce qu'**il consiste d'abord à poser le matelas (2) sur le panneau (1), des ouvertures (5) du matelas débouchant par des oeillets (21) venant devant des crochets (12) se dressant sur le panneau, puis à engager des boucles (9) de fil métallique dans les crochets, à descendre des boutons (8) sur les oeillets en faisant traverser deux trous (10) des boutons par les extrémités des boucles (9), et à assembler les extrémités des boucles pour fermer les boucles.

3. Procédé de fixation d'un matelas d'isolation à un panneau d'aéronef à protéger, **caractérisé en ce qu'**il consiste d'abord à poser le matelas (2) sur le panneau (1), des ouvertures (5) du matelas débouchant par des oeillets (21) venant devant des crochets (12) se dressant sur le panneau, puis à descendre des boutons (8) vers les oeillets, les boutons portant des boucles (19) de fil métallique ayant deux extrémités traversant les boutons par deux trous (10) et déformées pour s'appuyer sur le bouton, à déplacer les boutons (8) sur le matelas (2) pour engager les boucles (19) dans les crochets (12), et à assembler les extrémités des boucles pour fermer les boucles.

## Claims

1. System for fixing an insulation blanket (2) to an aircraft panel (1) that is to be protected, comprising: an opening (5) passing through the blanket and ending in an eyelet (21); a button (8) pierced by two holes (10) and covering the opening; and a loop (9) of wire passing through the holes, assembled onto the button (8) and inserted underneath the button; which system is **characterized in that** it comprises a hook (12) which is fixed to the panel by a base (13), rises into the opening (5) of the blanket toward the button (8), and then bends back toward the panel, ending in a free end at a distance from the panel and from the base so as to form a housing (17), and **in that** the loop (9) occupies the housing.

2. Method of fixing an insulation blanket (2) to an aircraft panel (1) that is to be protected, **characterized in that** it consists in first placing the blanket (2) on the panel (1), such that openings (5) passing through the blanket and ending in eyelets (21) are placed in front of the hooks (12) mounted on the panel; engaging loops (9) of wire in the hooks; lowering buttons (8) onto the eyelets in such a way that the ends of the loops (9) pass through two holes (10) in the buttons; and joining the ends of the loops to close the loops.

3. Method of fixing an insulation blanket to an aircraft panel that is to be protected, **characterized in that** it consists in first placing the blanket (2) on the panel (1), such that openings (5) passing through the blanket and ending in eyelets (21) are placed in front of the hooks (12) mounted on the panel; lowering buttons (8) toward the eyelets, the buttons having loops (19) of wire that have two ends that pass through the buttons via two holes (10) and that are deformed so as to press down on the button; moving the buttons (8) about on the blanket (2) to engage the loops (19) in the hooks (12); and joining the ends of the loops to close the loops.

## Patentansprüche

1. Anordnung zum Befestigen einer Isoliermatte (2) an einer zu schützenden Flugzeugplatte (I), mit einer Mattenöffnung (5), die in eine Öse (21) mündet, einem Knopf (8), der von zwei Löchern (10) durchsetzt ist und die Öffnung abdeckt, einer Schlaufe (9) aus Metalldraht, die durch die Löcher verläuft, am Knopf (8) angebracht ist und unter den Knopf geschoben ist, **dadurch gekennzeichnet, dass** sie einen Haken (12) aufweist, der über eine Basis (13) an der Platte befestigt ist, in der Mattenöffnung (5) nach oben zum Knopf (8) vorsteht und dann zu der Platte bis zu einem von der Platte und von der Basis entfernten freien Ende umgebogen ist und **dadurch** einen Aufnahmesitz (17) bildet, und dass die Schlaufe (9) den Aufnahmesitz belegt.

2. Verfahren zum Befestigen einer Isoliermatte (2) an einer zu schützenden Flugzeugplatte (1), **dadurch gekennzeichnet, dass** es zunächst darin besteht, die Matte (2) auf die Platte (1) zu legen, wobei Mattenöffnungen (5) in Ösen (21) münden, die sich vor Haken (12) befinden, die von der Platte emporragen, dann Schlaufen (9) aus Metalldraht in den Haken in Eingriff zu bringen, die Knöpfe (8) auf die Ösen abzusenken, wobei die Enden der Schlaufen (9) durch zwei Löcher (10) in den Knöpfen verlaufen, und die Enden der Schlaufen zusammenzufügen, um die Schlaufen zu schließen.

3. Verfahren zum Befestigen einer Isoliermatte an einer zu schützenden Flugzeugplatte, **dadurch gekennzeichnet, dass** es zunächst darin besteht, die Matte (2) auf die Platte (1) zu legen, wobei Mattenöffnungen (5) in Ösen (21) münden, die sich vor Haken (12) befinden, die von der Platte emporragen, dann Knöpfe (8) zu den Ösen abzusenken, wobei die Knöpfe Schlaufen (19) aus Metalldraht tragen, die zwei Enden besitzen, die durch zwei Löcher (10) in den Knöpfen verlaufen und verformt sind, um sich auf den Knopf abzustützen, die Knöpfe (8) auf der Matte (2) abzulegen, um die Schlaufen (19) in den Haken (12) in Eingriff zu bringen, und die Enden der Schlaufen zusammenzufügen, um die Schlaufen zu schließen.
